# EUROPEAN PATENT APPLICATION

(11) **EP 4 194 614 A1**
(43) Date of publication of application: **14.06.2023**
(21) Application number: 21852808.1
(22) Date of filing: 02.08.2021
(51) Int. Cl.: E02D 27/42, E02D 35/00, E02D 37/00

(54) **METHOD FOR THE EXTENSION OF FOUNDATIONS IN THE UPSIZING OF WIND FARMS**

(30) Priority: 07.08.2020 ES 202030850
(71) Applicant: HWS Concrete Towers, S.L., 20018 San Sebastián (ES)
(72) Inventor: MONTANER FRAGÜET, Jesús, 20018 San Sebastián (ES); SORAZU ECHAVE, José Manuel, 20018 San Sebastián (ES); ABADÍA PÉREZ, Mariano, 20018 San Sebastián (ES); MARTINEZ MARTINEZ, Amaía, 20018 San Sebastián (ES); SAIZ GARCÍA, Sergio, 20018 San Sebastián (ES)
(74) Representative: Schäfer, Matthias W.
(86) International application number: PCT/ES2021/070585
(87) International publication number: WO 2022/029355

(57) **Abstract**

Foundation extension procedure, of the type used in the extension of large structures, and especially its use in the reinforcement of existing wind turbine farms, founded in the earth, which uses an overlaid beams structure on the existing foundation and bonded to it, supported by new, smaller peripheral foundations, creating a new foundation capable of supporting a larger structure, which uses the old foundation as ballast. The main advantage of this invention is that it allows a quick and economical installation, minimizing the environmental impact, reusing both the existing foundation and most of the complementary infrastructures in the case of wind turbines, achieving a new, larger and stronger foundation, completely integrated in the environment.

## Description

As its title suggests, this description refers to a foundation extension procedure, of the type used in the extension of large structures, and especially its use in the reinforcement of existing wind turbine farms, founded in the earth or onshore, also known as repowering, which uses an overlaid beams structure on the existing foundation and bonded to it, supported by new, smaller peripheral foundations, creating a new foundation capable of supporting a larger structure, which uses the old foundation as ballast.

### Field of the invention

This invention relates to the construction of foundations on existing foundations, especially for the repowering of wind turbines with foundations in the earth.

### Current state of the art

There are currently a large number of wind farms, many of them located in adequate regions for the production of electrical energy generated by the wind because of their environmental properties. These wind farms already count with infrastructures in place, such as roads or access paths, buried pipelines for power lines, and power lines and transformer stations to transport the electricity generated. The term "repowering" refers to all activities related to the use and optimisation of the wind turbine capacities in a wind farm with new equipment or components. In recent years, the development of wind turbines has undergone numerous technological advances. Today's wind turbines achieve efficiency levels of more than 98 %, resulting in a significant increase in energy production, several times higher than that of wind turbines of a few years ago. They are also equipped with additional technical features such as wireless connection or intelligent algorithms to calculate the optimal operating point to increase the efficiency of the system. The third issue is the rapid increase in the installed power of each wind turbine, which has grown from 300-600 kW to 3.500 kW in 20 years.

This creates a demand to repower existing wind farms, replacing existing wind turbines by newer wind turbines, with new technologies, with an increased power and with higher energy production capabilities and bigger, which need a stronger foundation to withstand higher stresses.

In many cases, the repowering requires the dismantling of the wind turbines, the excavation and dismantling, demolition and complete removal of the previous foundation, an extremely expensive and time-consuming procedure, so that it was often decided to install the wind turbines elsewhere, leaving the previous site and causing great environmental impact.

To solve this situation and make use of the previous foundation, there are known procedures, such as those described in the patents ES-2493722 "Procedimiento de ejecucion de un aerogenerador para repotenciar un parque eólico existente y aerogenerador obtenido", KR20190101219 "Wind turbine Re-powering Foundation structures" and KR20200057954 "Wind turbine structure for retrofitting spread footing in partial repowering and construction method for the same", which carry out a large excavation around the already existing foundation, and build a new foundation around and on top of it, using conventional methods, achieving a new, stronger foundation. This presents many disadvantages, mainly due to the large excavations and earthworks required, as well as the need to use a large amount of concrete and metal reinforcement or rebar, as well as a large cross-section. The connection of this rebar with the existing foundation is very manual, slow and expensive to execute and with a questionable quality guarantee. All this implies expensive costs and a long construction time. We must add that, for a correct harden, the concreting work must be done continuously, without interruptions, requiring a stable supply of a high volume of concrete, which in many regions or countries is difficult or impossible to obtain. Extreme temperature conditions, both cold and hot weather, e.g. in desert areas, complicate the harden of the concrete because of the chemical reaction, and many optimal wind energy sites are in forests or semi-deserts because of the strong thermal winds.

Another additional problem is that the necessary excavation requires the creation of ramps for the heavy machinery to excavate to such a great depth, increasing the working time. The bottom of the excavation also needs to be levelled and smoothed.

All this causes that the usual time for excavation, preparation, concreting and hardening takes several weeks, which, multiplied by the large number of wind turbines in each wind farm, results in very expensive costs.

There are some foundation types known because of their capability to solve some of the above-mentioned problems of large excavations, high volume of concrete and use of rebar, such as the one described in ES2764468 *"Cimentación para torres eólicas*", which proposes the use of precast concrete beams combined with small basements, these beams being structurally bonded in the central part of the foundation by means of joining and supporting elements of the tower, but this presents the disadvantage that it is not foreseen nor is it possible to build on an existing foundation, nor to reuse it, and it also has the disadvantage of requiring in some cases the construction of a structure with ballast or weight functions, made on site with concrete in the area where the beams are joined.

### Description of the invention

In order to solve the existing problem of extending and enlarging foundations, especially in the case of repowering of existing onshore wind turbine farms, it has been developed the foundation extension procedure of the present invention, which uses a structure of beams overlaid on the existing foundation and joined to it, supported by new smaller peripheral foundations, creating a new foundation suitable for a larger structure, which uses the old foundation as a ballast in its central part.

For this purpose, the procedure comprises
- a phase of creation of peripheral foundations around the existing foundation,
- a phase of dismantling of the parts of the old structure, maintaining the existing foundation, and
- a following assembly phase of precast concrete beams on the peripheral foundations and the existing foundations, and bonding with the existing foundations in the core or central area where the beams meet.

The peripheral foundations phase and the dismantling phase of the elements of the old structure can be carried out in any order, or even simultaneously. Preferably, the peripheral foundations phase shall be carried out first, followed by the disassembly phase of the elements of the old structure, in order to reduce as much as possible the downtime of the old turbine in the case of wind turbines. The following phase of precast concrete beams assembly on the peripheral foundations and the existing foundation will always be carried out after the previous two phases.

After that, the new structure (such as for example, a wind turbine tower) will be placed on the anchorages provided in the new foundation.

The peripheral foundations will preferably be a multiple quantity of independent foundations, although it is foreseen that, alternatively, they may be joined together to form a single peripheral structure.

The phase of construction of peripheral foundations comprises preferably
- a first phase of excavation of multiple foundation digs,
- a second optional phase of partial filling of the digs with concrete, and
- a third phase for the assembly of small basements, precast in concrete or cast on site, equipped with support elements for the beams, and optionally with anchors, on the partial backfill, and
- a fourth phase of complete backfilling of the digs, leaving the support elements of the basements emerging from the ground level,
although, alternatively, this phase of peripheral foundations can be carried out by means of piles with their corresponding pile caps equipped with support elements.

The phase of precast concrete beams assembly on the peripheral foundations and the existing foundation and bonding with the existing foundation comprises
- a first phase of placing precast concrete beams, supported on sand jacks or any other functionally equivalent device, provisionally on the existing foundation, with the outer end supported on the support elements of the previously constructed basement,
- a second phase of connection between beams, and assembly of the canal with fixing to the existing foundation. The canal may be precast, with traditional, lost, permanent or non-permanent formwork,
- a third phase of setting a formwork for an upper layer, which may be precast, traditional, lost, permanent or non-permanent,
- a fourth phase of tautening of the beams and removal of the temporary supports, such as sand jacks or any other device that allows the beams to be supported during joining and following removal,
- a fifth phase of placement of reinforcement rod structure of the spaces to be concreted and insertion of the anchorages for the new tower or structure in the core area, and
- a sixth phase of concreting of the channel, of the upper layer and of the screed of beams.

It is foreseen that the procedure may include an additional phase, to be carried out after the third or fourth phase, of setting precast concrete enclosures for auxiliary functions in the space among beams, under the height of the upper layer.

A final optional additional phase is also foreseen, of total or partial covering of the existing beams, concreted elements and enclosures or connection boxes, with the earth extracted from the excavation of the digs.

The preferred use of this foundation extension procedure is the repowering of wind farms, to replace a wind turbine with another more powerful and with higher production, without dismantling the previous foundation.

### Benefits of the invention

This foundation extension procedure provides multiple advantages over those currently available, the main one is that it allows a quick and economical assembly of a new, bigger and stronger foundation without the dismantling of the existing foundation, mounting the new structure or wind turbine exactly on the same location.

Another advantage is that, by mounting the new structure or wind turbine exactly on the same location, the existing infrastructure for the previous structure or wind turbine, such as access paths, power supply ducts, maintenance facilities, etc., can be reused, avoiding the need to rebuild them, with the consequent savings in construction times and costs.

It should be noted that this procedure can be carried out, if necessary, with the rest of the wind turbine park in operation, without compromising its production.

It should be also noted that the procedure described, by joining the central part of the beams to the existing foundations, uses it as ballast, avoiding the need to build other additional concrete structures, occasionally filled with ballast stone, to act as ballast and reducing the volume of material required in the new foundation.

It is important to highlight that there is a minimum environmental impact, both by reusing both the existing foundations and most of the complementary infrastructures in the case of wind turbines, and by avoiding the large excavations required in the ampliation of foundations to create a conventional foundation from an existing one, which is a common method nowadays.

Another important advantage is that this procedure makes easier the repowering of wind turbines, enabling the profits of the best sites for their location, which is where the old wind farms are located, replacing them with plants with larger wind turbines, with much more electricity production.

This achieves a new, larger and more resistant foundation, with a minimum environmental impact and completely integrated into the environment thanks to the possibility of reusing the earth from the digs to cover it, forming an artificial mound to minimise the visual impact.

Another of the most important advantages to be highlighted is that thanks to the use of a large number of precast concrete parts, the on-site work time is greatly reduced compared to conventional procedures.

Another advantage is that is foreseen the integration of precast concrete enclosures for auxiliary functions in the space among beams, under the height of the upper layer, enabling the solution to the problem of setting, in the case of wind turbines, new larger transformers required by the greater power of the new wind turbine.

One more advantage is that the use of small basement footings provides an enormous saving in both the amount of concrete and the amount of reinforcing steel used, which implies both a significant economic saving and the possibility of implementation in regions or countries with problems of supply or manufacture of concrete or reinforcing steel in such quantities.

As a consequence of the above mentioned, the problems of the supply demand of a large quantity of concrete continuously and uninterruptedly, characteristic in large conventional foundations for its correct hardening, can be avoided. It also allows the use of conventional, pre-assembled rebar reinforcement without the need for costly and specialised on site reinforcement prior to concreting.

Another important advantage is that the excavation required is much smaller in both volume and depth, without the need for ramps for the heavy machinery as is usual in the case of conventional foundations, that need several metres depth. This results in considerable time and cost savings.

Another advantage of the present invention is that, unlike conventional methods, the bottom of the footings does not need to be perfectly levelled and smoothed, which also results in additional savings in time and costs.

It should also be noted that this procedure allows the wind turbine tower to be raised to a height of 3 to 5 metres above its normal height, reaching greater heights without modifying the tower and therefore using better the wind resource, which means a greater energy generation.

Another of the most important advantages of the use of precast elements is that the overall construction time of the foundation is significantly reduced from the usual 3 to 4 weeks with the conventional methods to a maximum of 1 week.

### Description of the drawings

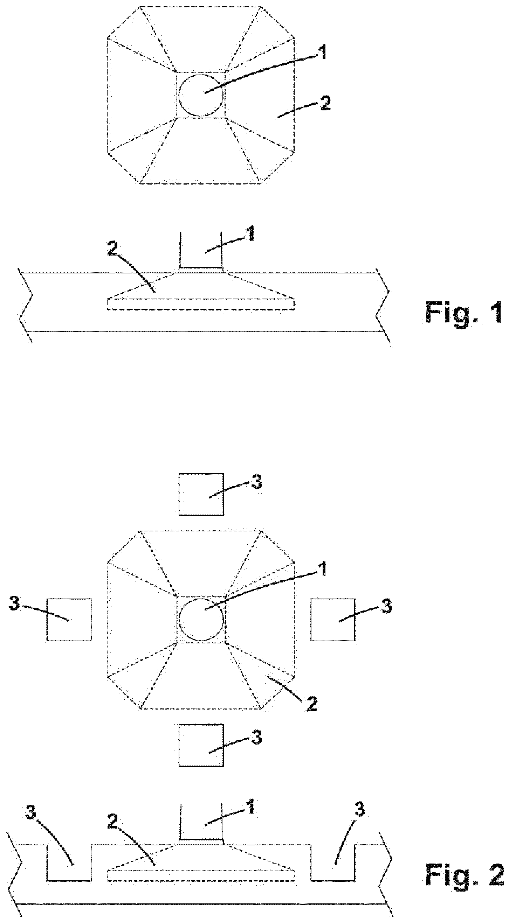

For a better understanding of the purpose of the present invention, the annexed drawing shows a practical and preferred embodiment of a foundation extension process.
In this drawing, figure 1 shows ground plan and frontal elevation views of an example of an existing structure and foundation, in this case a wind turbine tower.
Figure 2 shows ground plan and frontal elevation views of the excavation phase of multiple foundation digs.
Figure 3 shows some ground plan and frontal elevation views of the partial filling phase of the digs with concrete.
Figure 4 shows some ground plan and frontal elevation views of the phase of installation of the precast concrete basement footings.
Figure 5 shows some elevation views of the dismantling phase by means of a crane of the existing elements on the existing foundation.
Figure 6 shows some ground plan and frontal elevation views of the phase of installation of the precast concrete beams onto the existing foundation and on the basement footings.
Figure 7 shows some ground plan and frontal elevation views of the phase of connection among beams and installation of the canal.
Figure 8 shows ground plan and frontal elevation views of the excavation phase of installation of a precast formwork for an upper layer upon the canal.
Figure 9 shows some ground plan and frontal elevation views of the phase of placement of reinforcement rod structure of the spaces to be concreted and insertion of the anchorages for the new tower or structure in the canal.
Figure 10 shows some ground plan and frontal elevation views of the phase of concreting of the canal, upper layer and screed of beams.

### Preferred embodiment of the invention

The setting-up and features of the invention can be better understood with the following description made with reference to the attached drawings.

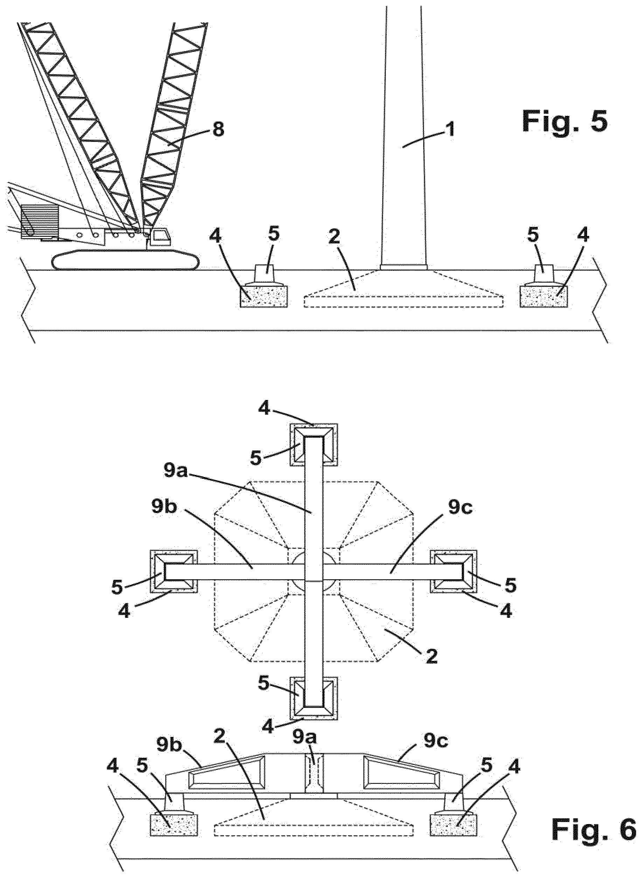

As can be seen in figures 1, 2, 3, 4, 5, 6, 7, 8, 9, 10, it is illustrated that the foundation extension procedure comprises
- a phase of creation of peripheral foundations (3, 4, 5) around the existing foundation (2), as in figures 1, 2, 3 and 4 illustrated,
- a phase of dismantling, by means of crane (8), of the elements (1) of the old structure, blades, nacelle and tower in case of a wind turbine, maintaining the existing foundation (2), as illustrated in figure 5, and
- a following assembly phase of precast concrete beams (9a, 9b, 9c) on the peripheral foundations (3, 4, 5) and the existing foundation (2), and bonding with the existing foundation (2), as shown in figures 6, 7, 8, 9 and 10.

The peripheral foundations (3, 4, 5) phase and the dismantling phase of the elements (1) of the old structure can be carried out in any order, or even simultaneously. Preferably, the peripheral foundations (3, 4, 5) phase shall be carried out first, followed by the disassembly phase of the elements (1) of the old structure, in order to reduce as much as possible the downtime of the old turbine in the case of wind turbines. The following phase of precast concrete beams assembly (9a, 9b, 9c) on the peripheral foundations (3, 4, 5) and the existing foundation (2) will always be carried out after the previous two phases.

After that, the new structure (such as for example, a wind turbine tower) will be placed on the anchorages provided.

The peripheral foundations (3, 4, 5) are preferably a multiple quantity of independent foundations, although it is foreseen that, alternatively, they may be joined together to form a single peripheral structure.

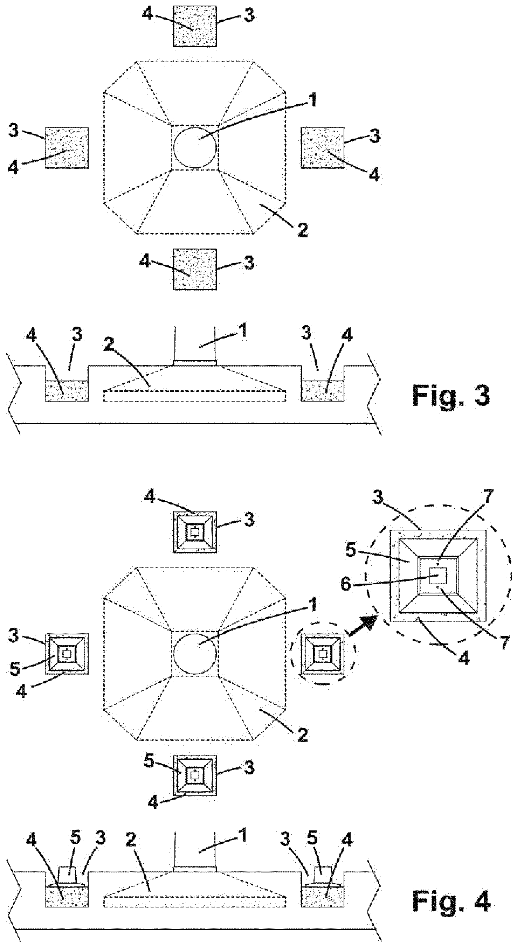

Preferably, the peripheral foundations (3, 4, 5) phase includes
- a first phase of excavation of multiple foundation digs (3), as in figure 2 illustrated,
- a second phase of partial filling (4) of the digs (3) with concrete or reinforced concrete, with a minimum of 10 cm of concrete for cleaning and levelling, as shown in figure 3,
- a third phase of assembly of basement footings (5) of reduced size, equipped with support elements (6) for the beams (9a, 9b, 9c), and optionally with anchors (7) to these beams (9a, 9b, 9c), on the partial backfill (4), as illustrated in figure 4, and
- a fourth phase of complete backfilling of the digs (3), leaving the support elements (6) of the basements (5) emerging from the ground level, as in figure 5 illustrated.

The basement footings (5) of reduced size will preferably be precast, although alternatively they can be also cast on site.

The second phase of partial backfilling (4) of the digs (3) will preferably be carried out with cleaning and levelling concrete, and more preferably with concrete of HL-20 type.

The backfilling will preferably be carried out up to a level of 2m below the base of the wind turbine tower.

An alternative embodiment is foreseen in which the peripheral foundation construction phase (3, 4, 5) includes the construction of piles equipped with support elements.

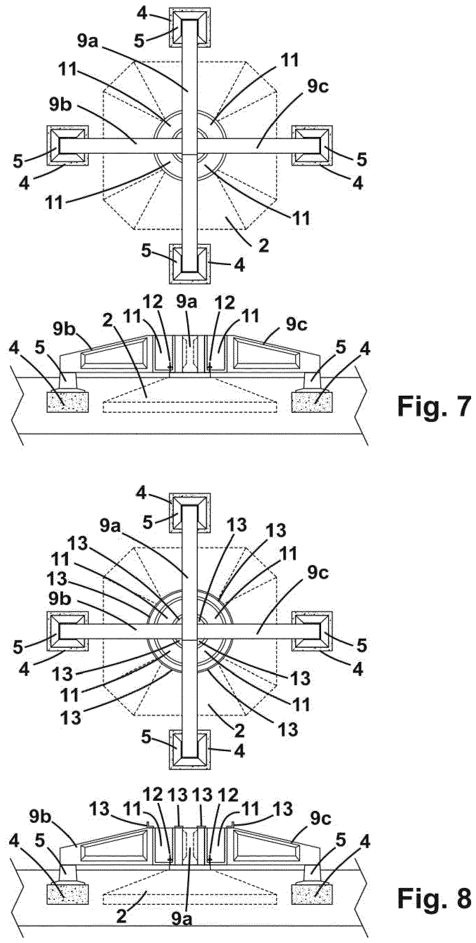

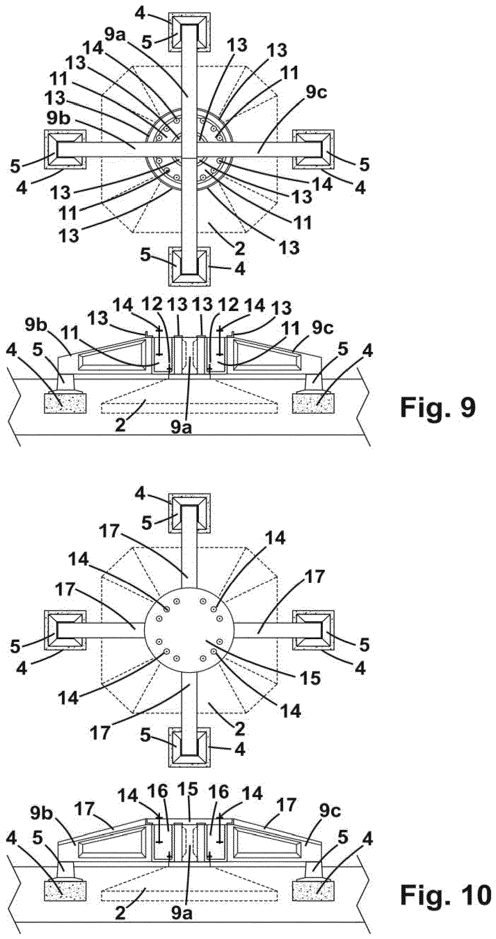

The assembly phase of precast concrete beams (9a, 9b, 9c) on the peripheral foundations and the existing foundation (2), and bonding with the existing foundation (2) comprises:
- a first phase of placing precast concrete beams (9a, 9b, 9c), supported on temporary supports, such as sand jacks or any other devices to support the beams during bonding, for later removal, on the existing foundation (2), with the outer end resting on the support elements (6) of the basement footing (5) rising from ground level, as illustrated in figure 6,
- a second phase of connection among beams (9a, 9b, 9c) and canal assembly (11) in the gaps around the central connection point among the beams (9a, 9b, 9c), with fixing to the existing foundation (2), as in figure 7 illustrated, where this canal (11) can be precast, with traditional, lost, permanent or non-permanent formwork,
- a third phase of setting a formwork (13) for an upper layer (15), on top of the canal (11) previously placed, where this formwork can be traditional, lost, permanent or non-permanent,
- a fourth phase of tautening of the beams (9a, 9b, 9c) and removal of the temporary supports, as in figure 8 illustrated,
- a fifth phase of placement of reinforcement rod structure of the spaces to be concreted and insertion of the anchorages (14) for the new tower or structure in the canal (11), as shown in figure 9 and
- a sixth phase of concreting (16) of the canal (11), of the upper layer (15) and of the screed (17) of beams (9a, 9b, 9c), as shown in figure 10.

In an alternative embodiment, the aforementioned fourth phase can be executed after the aforementioned sixth phase.

The precast concrete beams (9a, 9b, 9c) used in this phase are at least three, arranged horizontally in a radial alignment, the outermost end(s) of which are each supported on a precast concrete basement footing (5) by means of a support element (6) in the upper central part of mentioned footing (5), and are also fixed by means of multiple anchorages (7) between the outer end of the beam (9a, 9b, 9c) and the footing (5), being the different beams joined together in the central part of the foundation by means of connections. In a preferred embodiment, the beam (9a) is approximately twice as long as the beams (9b, 9c), in which case the inner ends of the beams (9b, 9c), arranged perpendicularly to the previously mentioned one, are joined to the central part of the beam (9a), forming a plantar cross structure.

The methods of joining of beams (9a, 9b, 9c) used in this phase include the use of joining methods chosen from the group formed by threaded rods, brackets, reinforcement endings for concreting in housings of another beam, tongue and groove joints and post-tensioning strands.

The fixing of the canal (11) and the central connection point among the beams (9a, 9b, 9c) with the existing foundation (2) is preferably carried out by means of the preexisting anchor rods (12) in the existing foundation (2), where the old existing elements (1) were fixed. Alternatively, this can be executed or supplemented by the use of connection methods chosen from the group formed by threaded rods, brackets, reinforcement endings for concreting in housings of another element, tongue and groove joints and post-tensioning strands.

We refer to the core as the whole set of elements that are built in the centre, among, over, around or under the beams (9a, 9b, 9c), including at least the canal (11), its concreting (16), the upper layer (15) and the anchors (14) for the new tower or structure.

It is foreseen that the procedure may include an additional phase, which can be carried out after the third phase, of placing precast concrete enclosures in the area among the beams (9a, 9b, 9c), under the height of the upper layer (15). These precast concrete enclosures can be in one piece or made up of several pieces and are intended to contain the wind turbine's electrical transformer in its chaos, or other complementary elements for its operation.

A final optional additional phase is also foreseen, of total or partial covering of the existing beams (9a, 9b, 9c), concreted elements and enclosures or connection boxes, with the earth extracted from the excavation of the digs (3), creating an artificial mound to minimize the visual impact, enabling an easy integration in its environment.

The preferred use of this foundation extension procedure is the repowering of wind farms, to replace a wind turbine with another more powerful and with higher production, without dismantling the previous foundation.

The skilled person in the art will easily understand that you can combine features of different embodiments with features of other possible embodiments, provided that such a combination is technically possible.

All information referring to examples or embodiments is part of the description of the invention.

## Claims

**1.** Foundation extension procedure of the type used in the extension of large structures, **wherein** it comprises
- a phase of creation of peripheral foundations (3, 4, 5) around the existing foundation (2),
- a phase of dismantling by means of crane (8) of the parts (1) of the old structure, maintaining the existing foundation (2),
- a following assembly phase of precast concrete beams (9a, 9b, 9c) on the peripheral foundations (3, 4, 5) and the existing foundation (2), and bonding with the existing foundation (2).

**2.** Foundation extension procedure according to the previous claim, **wherein** the peripheral foundation laying phase (3, 4, 5) is carried out first and then the disassembly phase of the parts (1) of the old structure.

**3.** Foundation extension procedure according to the previous claim, **wherein** the peripheral foundation laying phase (3, 4, 5) comprises
- a first phase of excavation of multiple foundation digs (3),
- a second optional phase of partial filling (4) of the digs (3) with concrete, and
- a third phase of assembly of basements (5) with support elements (6) for the beams, on the partial backfilling (4), and
- a fourth phase of complete backfilling of the digs (3), leaving the support elements (6) of the basements (5) emerging from the ground level.

**4.** Foundation extension procedure according to claim 3, **wherein the basements** (5) are chosen from the group formed by precast concrete ones and the ones concreted on the site.

**5.** Foundation extension procedure according to any of claims 3 and 4, **wherein the basements** (5) are fitted with anchorages (7) to the beams (9a, 9b, 9c).

**6.** Foundation extension procedure according to the previous claims 1 and 2, **wherein** the peripheral foundation laying phase (3, 4, 5) includes the construction of piles with supporting elements.

**7.** Foundation extension procedure according to any of the previous claims, **wherein** the assembly phase of precast concrete beams (9a, 9b, 9c) on the peripheral foundations and the existing foundation (2), and the bonding with the existing foundation (2), comprises
- a first phase of placing precast concrete beams (9a, 9b, 9c), supported on temporary supports on the existing foundation (2), and with the outer end supported on the support elements (6) of the basement (5) or pile cap emerging from the ground level,
- a second phase of connection among beams (9a, 9b, 9c) and canal assembly (11) in the gaps around the central connection point among the beams (9a, 9b, 9c), with fixing to the existing foundation (2),
- a third phase of setting a formwork (13) for an upper layer (15), on top of the canal (11) previously placed,
- a fourth phase of tautening of the beams (9a, 9b, 9c) and removal of the temporary supports,
- a fifth phase of placement of reinforcement rod structure of the spaces to be concreted and insertion of the anchorages (14) for the new tower or structure in the canal (11), and
- a sixth phase of concreting (16) of the canal (11), of the upper layer (15) and of the screed (17) of beams (9a, 9b, 9c).

**8.** Foundation extension procedure according to tha claim 7, **wherein** the precast concrete beams (9a, 9b, 9c) used in this phase are at least three, arranged horizontally in a radial alignment, the outermost end(s) of which are each supported on a precast concrete basement footing (5) by means of a support element (6) in the upper central part of mentioned footing (5), and are also fixed by means of multiple anchorages (7) between the outer end of the beam (9a, 9b, 9c) and the footing (5), being the different beams joined together in the central part of the foundation by means of connections.

**9.** Foundation extension procedure according to claim 8, **wherein** the beam (9a) is approximately twice as long as the beams (9b, 9c), in which case the inner ends of the beams (9b, 9c), arranged perpendicularly to the previously mentioned one, are joined to the central part of the beam (9a), forming a plantar cross structure.

**10.** Foundation extension procedure according to any of claims 7, 8 and 9, **wherein** the means of joining the beams (9a, 9b, 9c) include the use of joining methods chosen from the group formed by threaded rods, brackets, reinforcement endings for concreting in housings of another beam, tongue and groove joints and post-tensioning strands.

**11.** Foundation extension procedure according to claim 7, **wherein** the fixing of the canal (11) and of the central joining point among the beams (9a, 9b, 9c) with the existing foundation (2) is carried out by means of the already existing anchor bars (12) in the existing foundation (2), where the old existing elements (1) were fixed.

**12.** Foundation extension procedure according to claim 7, **wherein** the fixing of the canal (11) and of the central joining point among the beams (9a, 9b, 9c) with the existing foundation (2) includes the use of joining methods chosen from the group formed by threaded rods, brackets, reinforcement endings for concreting in housings of another element, tongue and groove joints and post-tensioning strands.

**13.** Foundation extension procedure according to any of the previous claims, **featuring** the inclusion of an additional phase, which can be carried out after the third phase, of placing precast concrete enclosures in the area among the beams (9a, 9b, 9c), under the height of the upper layer (15).

**14.** Foundation extension procedure according to any of the previous claims, **featuring** the inclusion of a final additional phase, of covering the beams (9a, 9b, 9c), concreted elements and existing enclosures or joints, with the earth extracted in the excavation of the digs (3), creating an artificial mound.

**15.** Use of a foundation extension procedure as described in the previous claims in the repowering of wind farms to replace a wind turbine with a higher power and output wind turbine.

**1.** Foundation extension procedure of the type used in wind farm foundation enlargements, **wherein** it comprises :
- a phase of creation of peripheral foundations (3, 4, 5) around the existing foundation (2),
- a phase of dismantling by means of crane (8) of the parts (1) of the old structure, maintaining the existing foundation (2),
- a following assembly phase of at least three precast concrete beams (9a, 9b, 9c) on the peripheral foundations (3, 4, 5) and the existing foundation (2), and bonding with the existing foundation (2), where these precast concrete beams (9a, 9b, 9c) are arranged horizontally in radial alignment,
whose outermost ends are supported on a precast concrete basement (5) by means of support elements (6) in the upper central part of this basement (5), being also fixed by multiple anchorages (7) between the outermost end of the beam (9a, 9b, 9c) and the basement (5).

**2.** Foundation extension procedure according to the previous claim, **wherein** the peripheral foundation laying phase (3, 4, 5) is carried out first and then the disassembly phase of the parts (1) of the old structure.

**3.** Foundation extension procedure according to the previous claim, **wherein** the peripheral foundation laying phase (3, 4, 5) comprises
- a first phase of excavation of multiple foundation digs (3),
- a second optional phase of partial filling (4) of the digs (3) with concrete, and
- a third phase of assembly of basements (5) with support elements (6) for the beams, on the partial backfilling (4), and
- a fourth phase of complete backfilling of the digs (3), leaving the support elements (6) of the basements (5) emerging from the ground level.

**4.** Foundation extension procedure according to claim 3, **wherein the basements** (5) are chosen from the group formed by precast concrete ones and the ones concreted on the site.

**5.** Foundation extension procedure according to any of claims 3 and 4, **wherein the basements** (5) are fitted with anchorages (7) to the beams (9a, 9b, 9c).

**6.** Foundation extension procedure according to the previous claims 1 and 2, **wherein** the peripheral foundation laying phase (3, 4, 5) includes the construction of piles with supporting elements.

**7.** Foundation extension procedure according to any of the previous claims, **wherein** the assembly phase of precast concrete beams (9a, 9b, 9c) on the peripheral foundations and the existing foundation (2), and the bonding with the existing foundation (2), comprises:
- a first phase of placing precast concrete beams (9a, 9b, 9c), supported on temporary supports on the existing foundation (2), and with the outer end supported on the support elements (6) of the basement (5) or pile cap emerging from the ground level,
- a second phase of connection among beams (9a, 9b, 9c) and canal assembly (11) in the gaps around the central connection point among the beams (9a, 9b, 9c), with fixing to the existing foundation (2),
- a third phase of setting a formwork (13) for an upper layer (15), on top of the canal (11) previously placed,
- a fourth phase of tautening of the beams (9a, 9b, 9c) and removal of the temporary supports,
- a fifth phase of placement of reinforcement rod structure of the spaces to be concreted and insertion of the anchorages (14) for the new tower or structure in the canal (11), and
- a sixth phase of concreting (16) of the channel (11), of the upper layer (15) and of the screed (17) of beams (9a, 9b, 9c).

**8.** Foundation extension procedure according to claim 7, **wherein** there at least three precast concrete beams (9a, 9b, 9c) and they are connected among them in the central part of the foundation by fixing means.

**9.** Foundation extension procedure according to claim 8, **wherein** the beam (9a) is approximately twice as long as the beams (9b, 9c), in which case the inner ends of the beams (9b, 9c), arranged perpendicularly to the previously mentioned one, are joined to the central part of the beam (9a), forming a plantar cross structure.

**10.** Foundation extension procedure according to any of claims 7, 8 and 9, **wherein** the means of joining the beams (9a, 9b, 9c) include the use of joining methods chosen from the group formed by threaded rods, brackets, reinforcement endings for concreting in housings of another beam, tongue and groove joints and post-tensioning strands.

**11.** Foundation extension procedure according to claim 7, **wherein** the fixing of the canal (11) and of the central joining point among the beams (9a, 9b, 9c) with the existing foundation (2) is carried out by means of the already existing anchor bars (12) in the existing foundation (2), where the old existing elements (1) were fixed.

**12.** Foundation extension procedure according to claim 7, **wherein** the fixing of the canal (11) and of the central joining point among the beams (9a, 9b, 9c) with the existing foundation (2) includes the use of joining methods chosen from the group formed by threaded rods, brackets, reinforcement endings for concreting in housings of another element, tongue and groove joints and post-tensioning strands.

**13.** Foundation extension procedure according to any of the previous claims, **featuring** the inclusion of an additional phase, which can be carried out after the third phase, of placing precast concrete enclosures in the area among the beams (9a, 9b, 9c), under the height of the upper layer (15).

**14.** Foundation extension procedure according to any of the previous claims, **featuring** the inclusion of a final additional phase, of covering the beams (9a, 9b, 9c), concreted elements and existing enclosures or joints, with the earth extracted in the excavation of the digs (3), creating an artificial mound.
